# EUROPÄISCHE PATENTSCHRIFT

(11) **EP 3 183 073 B1**
(45) Veröffentlichungstag und Bekanntmachung des Hinweises auf die Patenterteilung: **16.06.2021**
(21) Anmeldenummer: 16700862.2
(22) Anmeldetag: 18.01.2016
(51) Int. Cl.: B29C 51/10, B29C 51/36, B07C 5/342, B29C 49/42, B29L 31/00, B29C 49/06

(54) **VORRICHTUNG UND VERFAHREN ZUM TRANSPORT VON VORFORMLINGEN IM BEREICH EINER BLASMASCHINE**
DEVICE AND METHOD FOR TRANSPORTING PREFORMS IN THE REGION OF A BLOW-MOLDING MACHINE
DISPOSITIF ET PROCÉDÉ DE TRANSPORT DE PRÉFORMES DANS LA ZONE D'UNE MACHINE DE SOUFFLAGE

(30) Priorität: 22.01.2015 DE 102015000631
(43) Veröffentlichungstag der Anmeldung: 28.06.2017
(73) Patentinhaber: KHS Corpoplast GmbH, 22145 Hamburg (DE)
(72) Erfinder: LINKE, Michael, 22159 Hamburg (DE); BAUMGARTE, Rolf, 22926 Ahrensburg (DE); KLATT, Dieter, 22147 Hamburg (DE); LEWIN, Frank, 22889 Tangstedt (DE)
(74) Vertreter: Eisenführ Speiser
(86) Internationale Anmeldenummer: PCT/EP2016/000078
(87) Internationale Veröffentlichungsnummer: WO 2016/116266

(56) Entgegenhaltungen:
- DE-A1-102006 012 020
- DE-U1- 20 114 032
- FR-A1- 2 895 384

## Beschreibung

Die vorliegende Erfindung betrifft eine Transportvorrichtung gemäß dem Oberbegriff des Anspruchs 1, ein Transportsystem gemäß Anspruch 9 und eine Blasmaschine zur Blasformung von Behältern aus einem thermoplastischen Material gemäß Anspruch 10 und ein Verfahren gemäß Anspruch 11.

Bei der Behälterformung durch Blasdruckeinwirkung werden Vorformlinge aus einem thermoplastischen Material, beispielsweise aus PET (Polyethylenterephthalat), im Bereich einer Blasmaschine unterschiedlichen Bearbeitungsstationen zugeführt. Typischerweise weist eine derartige Blasmaschine eine Transportvorrichtung zur Zuführung von Vorformlingen an die Blasmaschine, eine Heizeinrichtung zur thermischen Konditionierung der Vorformlinge und eine Blasstation mit Blaseinrichtung auf, in deren Bereich die temperierten Vorformlinge durch biaxiale Ausdehnung zu einem Behälter expandiert werden. Die Expansion erfolgt mit Hilfe von unter Druck stehendem Gas, das in den zu expandierenden Vorformling eingeleitet wird.

Für einen unterbrechungsfreien Herstellungsprozess muss die Blasmaschine kontinuierlich mit Vorformlingen versorgt werden. Üblicherweise werden die Vorformlinge über einen sogenannten Vorformlingsförderer an die Blasmaschine geführt. Der Vorformlingsförderer besteht typischerweise aus einem Silo, in dem Vorformlinge unsortiert bevorratet sind, einem Steigförderer zur Entnahme und Weiterleitung der in dem Silo bevorrateten Vorformlinge, einem sich dem Steigförderer anschließenden Rollenförderer zur Ausrichtung der Vorformlinge und einer stromabwärts zum Rollenförderer angeordneten Ablaufschiene mit der die Vorformlinge der Blasmaschine ausgerichtet und aufgereiht zugeführt werden. Von der Ablaufschiene werden die Vorformlinge üblicherweise an ein Transportrad übergeben, mit dem sie in einen der Blasstation vorgeschalteten Bereich einer Heizvorrichtung transportiert werden.

Nach der Übergabe der Vorformlinge aus der Ablaufschiene an das Transportrad ist üblicherweise vorgesehen, die Vorformlinge auf Fehler und Unregelmäßigkeiten hin zu überprüfen und die als fehlerhaft oder für den Blasprozess als ungeeignet erkannten Vorformlinge mittels einer Selektionseinrichtung vor der Weiterführung an die Heizvorrichtung aus dem Transportstrom auszuschleusen.

Das Transportrad für die Übernahme aufgereihter und ausgerichteter Vorformlinge ist üblicherweise als Taschenrad konstruiert, wobei in den Taschen aufgenommene Vorformlinge herkömmlicherweise zwischen dem Transportrad und einem in radialer Richtung zu dem Transportrad beabstandeten kurvenartigen Führungskragen hängend auf einer Kreisbahn transportiert werden. Zur Inspektion und zur Aussonderung nicht geeigneter Vorformlinge kann dem Transportrad eine Inspektionsvorrichtung zugeordnet sein, die fehlerhafte oder für die Weiterverarbeitung ungeeignete Vorformlinge erkennt. Zur Aussortierung ungeeigneter Vorformlinge ist bekannt, den kurvenartigen Führungskragen, an dem die Vorformlinge mittels des Transportrades geführt werden, mit einer Schwenkbewegung von dem Transportrad zu entfernen. Die zur Schwenkzeit zwischen dem Transportrad und dem Führungskragen hängend transportierten Vorformlinge werden bei dieser Bewegung ausgeworfen.

Bei Auswurfmechaniken der beschriebenen Art ist nachteilig, dass gleich mehrere zwischen dem Führungskragen und dem Transportrad hängende Vorformlinge aussortiert werden. Damit werden nicht nur für die Weiterverarbeitung ungeeignete Vorformlinge aussortiert, sondern auch völlig intakte, für die Herstellung von Behältern gut geeignete Vorformlinge. Die beschriebene Auswurfmechanik führt aber nicht nur zu unnötigem Auswurf gut geeigneter Vorformlinge, sondern verursacht auch eine Verzögerung bei der Weiterführung der Vorformlinge. Die Schwenkbewegung des Führungskragens ist eine alternierende Bewegung, bei der der Führungskragen zunächst aus einer Grundposition heraus verschwenkt und nach dem Auswurf der Vorformlinge wieder zurückgeschwenkt werden muss. In dieser Zeit können keine weiteren Vorformlinge von dem Transportrad transportiert werden. Die Zuführung von weiteren Vorformlingen an das Transportrad wird während dieser Schwenkzeit üblicherweise gestoppt. Insbesondere bei hohen Prozessgeschwindigkeiten, bei denen mehrere Vorformlinge pro Sekunde zu Behältern geblasen werden, sind zeitaufwendige Vor- und Rückbewegungen derartiger Ausstoßmechaniken unerwünscht.

Es hat sich auch gezeigt, dass eine Inspektion von Vorformlingen, die hängend zwischen Transportrad und einem radial am Umfang des Transportrades angeordneten Haltekragen transportiert werden, bereichsweise schwierig auf Fehler oder Unregelmäßigkeiten zu untersuchen sind. Der Haltekragen verdeckt bisweilen Bereiche der Vorformlinge, die von den Sensoren der Inspektionseinrichtung nicht erfasst werden können.

Im Übrigen entsteht an den am Umfang des Transportrades angeordneten Führungskragen unerwünschte mechanische Reibung zwischen dem Führungskragen und den Vorformlingen, was zu erhöhtem Energieaufwand für den Transport der Vorformlinge sorgt und Reibspuren an den Vorformlingen hinterlässt. Nachteilig ist auch, dass es zur Abnutzung der Führungskragenflächen kommt.

Die Druckschrift DE 10 2006 012 020 A1 offenbart eine Transporteinrichtung gemäß dem Oberbegriff des Anspruchs 1.

Vor diesem Hintergrund ist Aufgabe der vorliegenden Erfindung verbesserte Vorrichtungen und Verfahren der eingangs Art bereitzustellen, die einen schonenden Transport von Vorformlingen im Bereich einer Blasmaschine bei hohen Geschwindigkeiten unterstützen und den unbeabsichtigten Auswurf von für die Weiterverarbeitung geeigneten Vorformlingen verhindern.

Die Aufgabe wird gelöst durch eine Transportvorrichtung mit den Merkmalen des Anspruchs 1, ein Transportsystem gemäß Anspruch 9 und eine Blasmaschine zur Blasformung von Behältern aus einem thermoplastischen Material gemäß Anspruch 10 und ein Verfahren gemäß Anspruch 11. Vorteilhafte Ausgestaltungen sind in den Unteransprüchen angegeben.

Erfindungsgemäß ist eine Transportvorrichtung zum Transport von Vorformlingen aus einem thermoplastischen Material im Bereich einer Blasmaschine zur Blasformung von Behältern, aufweisend ein um eine Rotationsachse drehbar gelagertes Transportrad mit mehreren, an seinem Umfang in Umfangsrichtung verteilt angeordneten Aufnahmerezessen zur Aufnahme und Beförderung der Vorformlinge, wobei an dem Transportrad im Bereich der Aufnahmerezesse jeweils ein Hakenelement angeordnet ist, das zwischen einer Offenstellung und einer Geschlossenstellung verschwenkbar an dem Transportrad gelagert ist, und wobei das Hakenelement in der Geschlossenstellung einen zu transportierenden Vorformling in dem jeweiligen Aufnahmerezess gegen Herausfallen aus dem Aufnahmerezess sichert. Das Hakenelement kann den Vorformling insbesondere klemmend sichern.

Für eine insbesondere klemmende Halterung der Vorformlinge in den Aufnahmerezessen ist denkbar, dass die Aufnahmerezesse etwa zangenförmig die Vorformlinge umgreifen, insbesondere über einen Winkelbereich von 180° oder mehr als 180°. Dafür kontaktiert das Hakenelement die Vorformlinge physisch insbesondere unterhalb eines unterhalb ihres Mündungsbereiches angeordneten Stützrings. Zusätzlich oder alternativ zu einer klemmenden Halterung kann vorgesehen sein, dass die Vorformlinge mit ihren Stützringen jeweils auf dem Rand des Transportrads und/oder auf einem Rand des Hakenelements aufliegen.

Denkbar ist, dass die Rotationsachsen der Hakenelemente und die Rotationsachse des Transportrades in jeweils gemeinsamen Ebenen liegen. Insbesondere ist daran gedacht, dass die Rotationsachsen des Hakenelements und des Transportrades parallel zueinander verlaufenden. Bevorzugt ist vorgesehen, dass sowohl der Auswurfstern als auch das Transportrad um jeweils starr angeordnete Drehachsen rotierend gelagert sind.

In einer einfachen Ausgestaltung der erfindungsgemäßen Transportvorrichtung kann das Transportrad als Taschenrad mit an seinem Umfang, insbesondere gleichmäßig, verteilt angeordneten taschenartigen Aufnahmerezessen ausgebildet sein. Es kann vorgesehen sein, dass die Aufnahmerezesse des Transportrades die Vorformlinge jeweils an einem Schaftbereich unterhalb eines Stützrings des Vorformlings in der Transportstellung zumindest bereichsweise umgreifend ausgebildet sind.

Erfindungsgemäß ist vorgesehen, dass die Transporteinrichtung eine Auswurfeinheit zur selektiven Aussonderung jeweils eines einzelnen, in einem der Aufnahmerezesse des Transportrades transportieren Vorformlings aufweist, wobei die Auswurfeinheit einen zwischen einer Stoßstellung und einer Ruhestellung längsverschiebbaren Auswurfstößel aufweist, und wobei der Auswurfstößel in der Stoßstellung derart in den Bereich eines der Aufnahmerezesse ragt, dass ein in diesem

Aufnahmerezess befindlicher Vorformling aus dem Aufnahmerezess herausgestoßen wird. Alternativ zu einem Auswurfstößel kann ein Druckluftventil vorgesehen sein, mit dem ein Vorformling per Druckluftstoß aus dem Aufnahmerezess herausgestoßen wird.

In der Ruhestellung des Auswurfstößels wird der Transport der Vorformlinge an dem rotierenden Transportrad nicht gestört. Bei der Bewegung in die Stoßstellung ist denkbar, dass der Auswurfstößel den auszusondernden Vorformling gegen die Haltekraft des Hakenelements aus dem Aufnahmerezess ausstößt. Denkbar ist auch, dass die Öffnung des Hakenelements mit der Längsbewegung des Auswurfstößels gekoppelt ist, so dass das Hakenelement bei der Betätigung des Auswurfstößels in die Öffnungsstellung bewegt wird.

Mit der vorgeschlagenen Selektiereinheit können einzelne, an dem Transportrad transportierte Vorformlinge aus dem Transportstrom ausgesondert bzw. ausgeworfen oder ausgeschleust werden. Darunter wird verstanden, dass die zur Aussonderung selektierten Vorformlinge aus dem Transportstrom herausgeführt werden und somit den sich anschließenden Prozessschritten zur Herstellung eines Behälters entzogen werden. Es versteht sich, dass zeitlich nacheinander beliebig viele zur Aussonderung vorgesehene Vorformlinge aus dem Transportstrom im Bereich der Sortiervorrichtung entfernt werden können.

Diese vorgeschlagene Art der Aussortierung einzelner Vorformlinge, hat sich als besonders vorteilhaft für einen Transport bei hohen Prozessgeschwindigkeiten gezeigt. Im Gegensatz zu herkömmlich eingesetzten Auswurfmechaniken, bei denen Vorformlinge durch Weichen oder durch vor- und zurück-schwenkende Führungskragen aus dem Transportstrom ausgesondert werden, ist die vorgeschlagene ausstoßende Auswurfbewegung mittels eines Auswurfstößels bzw. durch Druckluftstöße besonders zeitsparend und effizient.

Da bei dem erfindungsgemäßen Transportrad kein Führungskragen radial am Umfang notwendig ist, ist kein Wegschwenken des Kragens notwendig, um einen Vorformling auszustoßen. Dies führt zur Leistungssteigerung derartiger Transportvorrichtungen mit Auswurfeinheit, damit verbundener Transportsysteme, zugehöriger Inspektionssysteme und schließlich zur Leistungssteigerung einer nachgeordneten Maschine wie zum Beispiel einer Blasmaschine insgesamt.

Neben dem Transport und dem Auswurf bzw. der Ausschleusung von Vorformlingen aus thermoplastischem Material kann auch vorgesehen sein, die Vorrichtung für den Transport bzw. die Handhabung von Behältern, insbesondere Flaschen oder Behälterverschlüsse oder dergleichen auszubilden und einzurichten. Dafür kann notwendig sein, die hier beschriebene Transportvorrichtung und/oder Anbauteile der Transportvorrichtung entsprechend anzupassen.

Eine sichere Ausschleusung eines zur Aussonderung vorgesehenen Vorformlings wird dadurch unterstützt, dass der Auswurfstößel den auszuschleusenden Vorformling insbesondere zwangsgeführt aus dem Aufnahmerezess herausbewegt. Hierbei ist vorgesehen, dass die auszusondernden Vorformlinge mit einer Richtungskomponente in radial nach außen weisender Richtung des Transportrades aus den Aufnahmerezessen insbesondere stoßartig herausbewegt werden. Bei der zwangsgeführten Bewegung erfasst der Auswurfstößel den auszuschleusenden Vorformling vorzugsweise im Mündungsbereich und stößt den Vorformling mechanisch von dem Transportrad weg.

In einer bevorzugten Ausgestaltung ist vorgesehen, dass die Transportvorrichtung eine Inspektionsvorrichtung umfasst, wobei die Inspektionsvorrichtung ausgebildet und eingerichtet ist, einen in einem der Aufnahmerezesse transportierten Vorformling sensorisch zu erfassen. Die sensorische Erfassung kann insbesondere kontaktlos, beispielsweise optisch oder akustisch durchgeführt werden. Dafür können entsprechende Sensoren und bedarfsweise eine entsprechende Steuerung zu verwendet werden. Die Inspektionsvorrichtung ist derart im Bereich des Transportrades angeordnet, dass ein Sensor der Inspektionsvorrichtung einen in einem der Aufnahmerezesse transportierten Vorformling erfassen kann, zum Beispiel mit Sensorblickrichtung quer oder schräg zur Längsachse der transportierten Vorformlinge.

In einer bevorzugten Ausgestaltung ist vorgesehen, dass die Transportvorrichtung ein Kurvensegment umfasst, mit dem zumindest eines der Hakenelemente mechanisch in die Offenstellung bzw. in die Geschlossenstellung bewegbar ist.

Das Kurvensegment kann zumindest bereichsweise als Schiene oder als Nut oder dergleichen ausgebildet sein. Denkbar ist, dass eine Kurvenscheibe zur Führung der Hakenelemente genutzt wird. In einer einfachen Ausführung kann das Hakenelement als Wippe ausgebildet sein, die an einer Schwenkachse drehgelagert an dem Transportrad angeordnet ist. In dieser Ausgestaltung ist daran gedacht, dass die Hakenelemente bei einer Rotation des Transportrades an dem Kurvensegment entlang geführt werden und beim überstreichen der Kurvenform mechanisch in die Offen- bzw. Geschlossenstellung gezwungen werden.

Bevorzugt werden die Kurvensegmente in den Bereichen des Transportrades eingesetzt, in denen kein Transport vorgesehen, beispielsweise stromabwärts hinter einem Auslassbereich und vor einem Einlassbereich. In diesem Bereich kann gewünscht sein, dass die Hakenelemente ständig in der Offenstellung sind. Andererseits kann das Kurvensegment in Bereichen, in denen eine Öffnung der Hakenelemente nicht vorgesehen ist, eingesetzt werden, um die Hakenelemente gegen unbeabsichtigtes Verschwenken in die Offenstellung zu sichern. Beispielsweise stromabwärts hinter einem Einlaufbereich bis zu einem Auswurf oder Auslassbereich.

Die Hakenelemente können in eine bestimmte Position federvorgespannt sein, zum Beispiel in die Offenstellung oder in die Geschlossenstellung oder in eine Zwischenposition. Hierbei kann vorgesehen sein, dass das Kurvensegment das Hakenelement zwangsgeführt aus der federvorgespannten Stellung herausbewegt, wobei das Hakenelement die durch die Federspannung bedingte Position nach Überfahren des Kurvensegmentes zwanglos und/oder durch das Kurvensegment geführt wieder einnimmt.

Alternativ oder zusätzlich zur Verwendung einer Kurvensteuerung mittels eines oder mehrerer Kurvensegmente kann vorgesehen sein, dass die Hakenelemente jeweils einen Antrieb aufweisen, mit dem sie in die Offenstellung und/oder in die Geschlossenstellung bewegbar sind. Der Antrieb kann beispielsweise ein elektromotorischer, ein hydraulischer oder ein druckluftbetriebener Antrieb sein.

Die Antriebe können über eine zentrale Steuerung der Transportvorrichtung und/oder von einer Steuerung einer Blasmaschine steuerbar bzw. überwachbar sein. Bei einer individuellen Ansteuerbarkeit und Überwachbarkeit der Hakenelemente kann ein Bediener der Transportvorrichtung bzw. der Blasmaschine in einfacher Weise Steuerungseinstellungen der Hakenelemente vornehmen bzw. ändern, ohne die Notwendigkeit von mechanische Anpassungen der Vorrichtung. Außerdem können Fehlstellungen der Hakenelemente leicht durch Verwendung von Sensoren überwacht werden. Bei Anpassungen der Maschine an unterschiedliche Prozessabläufe oder anderen Veränderungen der Blasmaschine oder der Transportvorrichtung kann eine Anpassung des Bewegungsprofils der Hakenelemente sehr einfach und schnell vorgenommen werden.

In einer möglichen Ausgestaltung kann vorgesehen sein, dass die Hakenelemente federvorgespannt in der Offenstellung oder in der Geschlossenstellung gehalten sind. Alternativ können die Hakenelemente in einer Zwischenstellung zwischen der Geschlossen- und der Offenstellung federvorgespannt gehalten sein. Mit einer Federvorspannung ist eine einfache, insbesondere eine passive Rückführung der Hakenelemente nach einer Auslenkung aus der Offen- bzw. Geschlossenstellung möglich.

In einer bevorzugten Ausgestaltung der Erfindung ist vorgesehen, dass die Schwenkachsen der Hakenelemente jeweils parallel zur Rotationsachse des Transportrades ausgerichtet an dem Transportrad gelagert sind. In bestimmten Anwendungsfällen kann alternativ vorgesehen sein, dass die Schwenkachsen der Hakenelemente jeweils windschief oder die Rotationsachse des Transportrades schneidend ausgerichtet an dem Transportrad gelagert sind. Eine parallele Ausrichtung der Rotationsachsen ermöglicht eine konstruktiv einfache und robuste Lagerung der Schwenkachsen und führt auch zu einer kostengünstigen Herstellung der Bauteile. Die parallele Ausrichtung ist besonders zweckmäßig für den aufrechten Transport von Vorformlingen mit einer Ausrichtung quer zu einer Rotationsebene des Transportrades.

In einer bevorzugten Ausgestaltung ist vorgesehen, dass die Transportvorrichtung eine Führungsschiene zum Abtransport von Vorformlingen aufweist, die derart in den Bereich des Transportrades ragt, dass an dem rotierenden Transportrad in den Aufnahmerezessen transportierte Vorformlinge zwangsgeführt von der Führungsschiene übernommen und von dem Transportrad wegführt werden. Dies erleichtert den Ab- und Weitertransport der Vorformlinge. Beispielsweise kann vorgesehen sein, dass die Vorformlinge mit ihrem Stützring zwischen zwei Führungselementen der Führungsschiene hängend transportiert werden, vorzugsweise mit dem Stützring auf den Führungselementen gleitend.

Für eine einfache Anpassbarkeit der Prozessgeschwindigkeit der Sortiereinrichtung und für einen reibungslosen Ablauf des Aussonderungsprozesses beim Wechsel von Transportgeschwindigkeiten im Bereich der Transportvorrichtung oder eines Transportsystems kann vorgesehen sein, dass die Längsverschiebung des Auswurfstößels mit der Rotationsbewegung des Transportrades synchronisiert ist.

Bei der synchronisierten Längsverschiebung des Auswurfstößels mit dem Transportrad ist insbesondere daran gedacht, dass die Geschwindigkeit der Längsverschiebung des Auswurfstößels und die Rotationsgeschwindigkeit des Transportrades linear voneinander abhängig sind. Dies kann bedeuten, dass bei der Erhöhung der Rotationsgeschwindigkeit des Transportrades auch die Geschwindigkeit der Längsverschiebung des Auswurfstößels beim Aussondern eines einzelnen Vorformlings in linearem Verhältnis steigt. Gleiches gilt beim Senken der Geschwindigkeiten. Alternativ oder zusätzlich ist auch daran gedacht, zumindest zeitweise ein nichtlineares Abhängigkeitsverhältnis zwischen der Längsverschiebung des Auswurfstößels und der Rotationsbewegung des Transportrades vorzusehen. Dies ermöglicht eine zumindest zeitweise beschleunigte Längsverschiebung des Auswurfstößels gegenüber dem Transportrad bzw. umgekehrt.

Die Synchronisierung der Bewegungen hat Vorteile bezüglich der Skalierbarkeit der Prozessgeschwindigkeiten. Bevorzugt ist die Längsverschiebung des Auswurfstößels bezüglich der Rotationsbewegung des Transportrades getaktet.

Bei der Synchronisierung der Bewegungen ist insbesondere daran gedacht, dass eine Längsverschiebung des Auswurfstößels in die Stoßstellung nur ermöglich ist, wenn sich ein Vorformling im Betätigungsbereich des Auswurfstößels befindet. Damit kann eine verfrühte bzw. eine verspätete Auslösung des Auswurfmechanismus verhindert werden. Für diese Ausgestaltung ist daran gedacht, dass die Position des Transportrades erfasst und zur Steuerung des Auswurfstößels weiter verarbeitet wird. Dies kann über eine dafür vorgesehene Steuerung erfolgen, beispielsweise über eine Steuerung der Transportvorrichtung oder über eine Steuerung einer Blasmaschine.

Erfindungsgemäß ist auch ein Verfahren zur Zuführung von Vorformlingen an eine Blasmaschine zur Blasformung von Behältern aus einem thermoplastischen Material, wobei aufgereihte und ausgerichtete Vorformlinge an eine erste Vereinzelungseinheit mit einer erfindungsgemäßen Transportvorrichtung zum Transport von Vorformlingen der zuvor beschriebenen Art übergeben werden, die Vorformlinge im Bereich der Vereinzelungseinheit mittels einer Inspektionsvorrichtung geprüft werden, und die Vorformlinge anschließend an eine Staustrecke zum Aufstauen und/oder zum Schließen von zwischenzeitliches Aussondern einzelner Vorformlinge entstandenen Lücken übergeben werden.

Für eine zuverlässige Erkennung von fehlerhaften oder für die Weiterverarbeitung ungeeigneten Vorformlingen kann vorgesehen sein, dass die Vorformlinge im Bereich der Transportvorrichtung mittels der Inspektionsvorrichtung kontaktlos, insbesondere optisch auf Materialunregelmäßigkeiten hin überprüft werden.

Bei dem erfindungsgemäßen Verfahren zur Zuführung von Vorformlingen werden die Vorformlinge aufgereiht und ausgerichtet an eine Vereinzelungseinheit übergeben. Dabei kann vorgesehen sein, dass die Vorformlinge im Bereich einer der Vereinzelungseinheit vorgeschalteten Fördereinrichtung, insbesondere mit einem Rollensortierer aufgereiht und ausgerichtet werden. Die erste Vereinzelungseinheit dient der Sondierung bzw. Bearbeitung einzelner Vorformlinge. Die sich der ersten Vereinzelungseinheit mit der Transportvorrichtung anschließende Staustrecke kann zum Beispiel als Luftförderer und/oder als zumindest bereichsweise waagerecht verlaufende Ablaufschiene ausgebildet sein.

In einer weiteren Ausgestaltung des Verfahrens ist daran gedacht, dass die Vorformlinge aus der Staustrecke kommend an eine zweite Vereinzelungseinheit übergeben werden und nach erfolgter Vereinzelung lückenlos separiert weitertransportiert werden.

Bei der Übernahme aus der Staustrecke und der Weiterführung der Vorformlinge in der zweiten Vereinzelungseinheit ist dafür gesorgt, dass die Vorformlinge lückenlos und vereinzelt an weitere Bearbeitungsstationen der Blasmaschine übergeben werden können. Die Lückenschließung ist vorteilhaft, da so ein unterbrechungsfreier Ablauf bei der Herstellung der Behälter in der Blasmaschine unterstützt wird.

Vorteile und Varianten zu dem erfindungsgemäßen Verfahren ergeben sich unter anderem auch aus den zu der erfindungsgemäßen Transportvorrichtung erläuterten Details.

Erfindungsgemäß ist auch ein Transportsystem zur Zuführung von Vorformlingen an eine Blasmaschine für die Blasformung von Behältern aus thermoplastischem Material, wobei die Blasmaschine ausgebildet und eingerichtet ist zur Ausführung eines der zuvor beschriebenen Verfahren. In einer bevorzugten Ausgestaltung des Transportsystems ist vorgesehen, dass das Transportsystem eine der zuvor beschriebenen Transportvorrichtungen aufweist.

Erfindungsgemäß ist auch eine Blasmaschine zur Blasformung von Behältern aus einem thermoplastischen Material, aufweisend eine der zuvor beschriebenen Transportvorrichtungen oder eines der zuvor beschriebenen Transportsysteme. Bevorzugt ist die Blasmaschine ausgebildet und eingerichtet zur Ausführung eines der zuvor beschriebenen Verfahren.

Vorteile und bevorzugte Ausgestaltungen der erfindungsgemäßen Blasmaschine ergeben sich auch aus den zur erfindungsgemäßen Transportvorrichtung, zum erfindungsgemäßen Verfahren oder zum erfindungsgemäßen Transportsystem erläuterten Details.

Ausführungsbeispiele der Erfindung sind in den Zeichnungen schematisch dargestellt. Es zeigen:
- Fig. 1: eine erfindungsgemäße Transportvorrichtung und weiterer Komponenten in perspektivischer Ansicht von schräg oben,
- Fig. 2: die Transportvorrichtung und der weiteren Komponenten aus Fig. 1 in einer perspektivischen Ansicht von schräg unten,
- Fig. 3: ein erfindungsgemäßes Transportrad mit Hakenelementen in der Geschlossenstellung in perspektivischer Ansicht von schräg unten,
- Fig. 4: das erfindungsgemäße Transportrad aus Fig. 3 mit Hakenelementen in der Offenstellung in perspektivischer Ansicht von schräg oben, und
- Fig. 5: eine stark schematisierte Darstellung eines Transportsystems mit einer erfindungsgemäßen Transportvorrichtung, einer Staustrecke und einer Vereinzelungsvorrichtung.

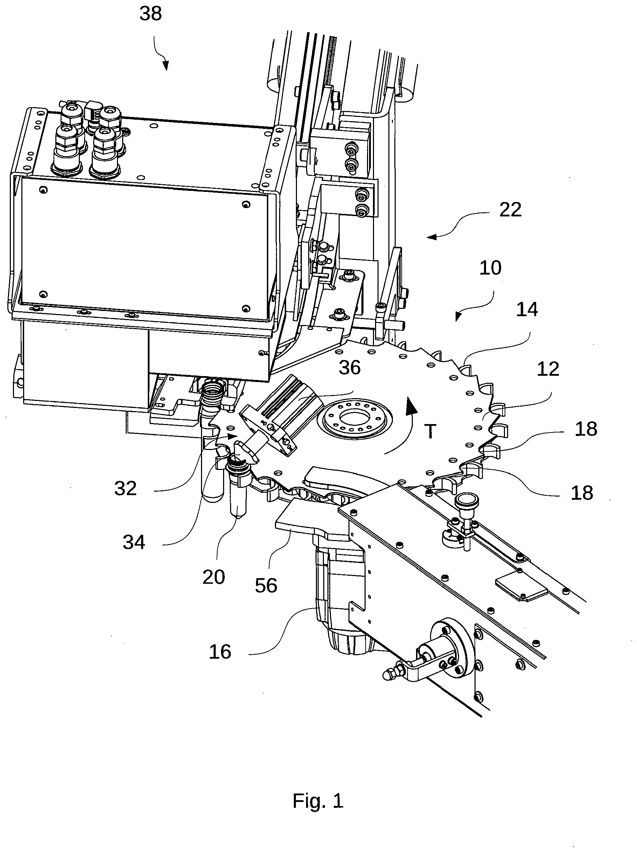

Fig. 1 ist eine isometrische Darstellung einer erfindungsgemäßen Transportvorrichtung 10 mit einem in einer Ebene rotierenden Transportrad 12 und einer Auswurfeinheit 32. Außerdem ist eine Inspektionsvorrichtung 38, ein Einlaufbereich 22 sowie eine Führungsschiene 56 dargestellt. Die für den Transport der Vorformlinge 20 vorgesehene Rotationsrichtung des Transportrades 12 ist mit dem Richtungspfeil T angedeutet.

Die Auswurfeinheit 32 ist vorliegend in der Zeichnungsperspektive oberhalb des Transportrades 12 angeordnet. Die Auswurfeinheit 32 hat einen Auswurfstößel 34, der längsverschiebbar an einem Antrieb 36 gelagert ist. Die Auswurfeinheit 32 ist vorzugsweise an einer Tragstruktur der Transportvorrichtung 10 befestigt, insbesondere drehfest gegenüber dem Transportrad 12. Zur zeichnerischen Vereinfachung und zur besseren Übersichtlichkeit wurde - wie auch an anderen Stellen der Figuren - auf die Darstellung einer Tragstruktur, also beispielsweise eines Gestells der Transportvorrichtung 10 bzw. der Ausstoßeinheit 32 verzichtet.

Das Transportrad 12 weist taschenartige Aufnahmerezesse 18 auf, die zur Aufnahme und zum Halterung von Vorformlingen 20 ausgebildet sind. Beim Transport werden die Vorformlinge 20 durch Hakenelemente 14 zumindest bereichsweise umgriffen und in den Aufnahmerezessen 18 gehalten. Damit sind die Vorformlinge 20 beim Transport an dem Transportrad 12 gegen Herausfallen gesichert. Die Hakenelemente 14 sind vorzugsweise wippenartig ausgebildet und mittels einer Schwenkachse drehgelagert an dem Transportrad 12 angeordnet. Die schwenkbar gelagerten Hakenelemente 14 sind in eine Offen- und in eine Geschlossenstellung bewegbar.

Wie beispielhaft dargestellt, ist ein Einlaufbereich 22 vorgesehen, der zur Übergabe von Vorformlingen 20 an das Transportrad 12 dient. Zur Aufnahme eines Vorformlings 20 in einen Aufnahmerezess 18 wird das Hakenelement 14 in eine Offenstellung bewegt. Bei der Übernahme eines Vorformlings 20 in einen Aufnahmerezess 18 wird das Hakenelement 14 in eine Geschlossenstellung bewegt. Dafür sind die Hakenelemente 14 jeweils verschenkbar an dem Transportrad 12 gelagert. Wie dargestellt, sind die Hakenelemente 14 vorzugsweise in der Zeichnungsperspektive unterhalb des Transortrads 12 angeordnet.

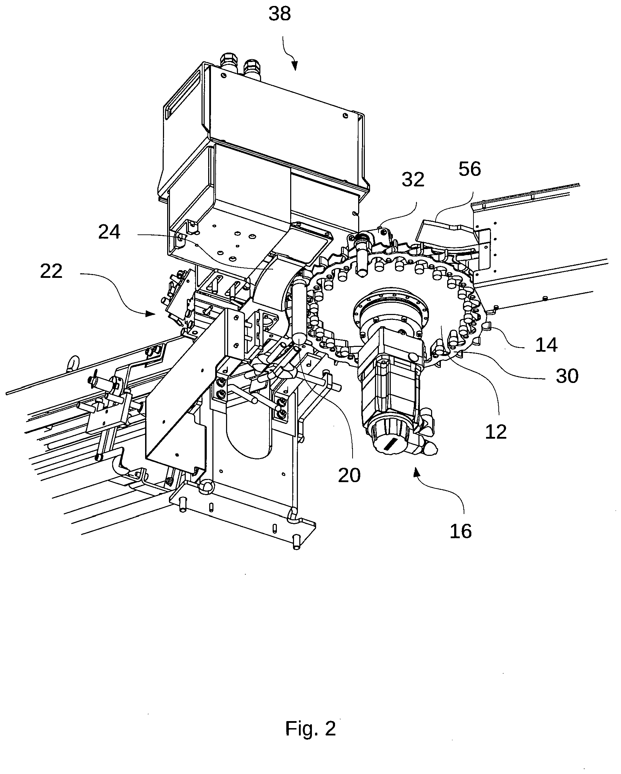

Wie in den Fig. 1 und 2 dargestellt, ist im Bereich der Transportvorrichtung 10 vorzugsweise eine Inspektionsvorrichtung 38 angeordnet. Die Inspektionsvorrichtung 38 dient zum Beispiel zur Erkennung von für den Blasprozess ungeeigneten Vorformlingen 20. Diese Information kann zur Steuerung der Auswurfeinheit 32 dienen.

In dargestellter Variante ist vorgesehen, dass die Auswurfeinheit 32 einen auszusondernden Vorformling 20 mit radial nach außen weisender Richtungskomponente vom Transportrad 12 wegschiebt bzw. -stößt. Vorliegend ist die Verschiebungsachse des Auswurfstößels 34 schräg zur Rotationsebene des Transportrades 12 ausgerichtet. Damit wird ein auszusondernder Vorfomling 20 mit dem Auswurfstößel 34 in der Zeichnungsperspektive von schräg oben kontaktiert.

Rein schematisch ist in Stoßrichtung vor dem Auswurfstößel 34 ein Vorformling 20 gezeigt, der in einem Aufnahmerezess 18 von einem dem Hakenelement 14 gehalten ist. Wie vorliegend zeichnerisch vereinfacht dargestellt, kontaktiert der Auswurfstößel 34 einen auszusondernden Vorformling 20 vorzugsweise im seinem Mündungsbereich.

Eine der Auswurfeinheit 32 in Transportrichtung der Vorformlinge stromabwärts nachgeordnete Führungsschiene 56 übernimmt die von dem Transportrad 12 transportierten Vorformlinge 20 und leitet diese für den Weitertransport vom Transportrad 12 weg. Dafür ist insbesondere vorgesehen, dass das entsprechende Hakenelement 14 bei der Übergabe des Vorfomlings 20 an die Führungsschiene 56 in die Offenstellung bewegt wird.

In Zeichnungsperspektive unterhalb des Transportrades 12 ist ein für das Transportrad 12 vorgesehener Antrieb 16 gezeigt. Wie dargestellt, kann der Transportradantrieb 16 sowohl zum Antrieb als auch zur tragenden Halterung des Transportrades 12 vorgesehen sein. Der Antrieb 16 kann dafür an einem Tragegestell der Transportvorrichtung 10 befestigt sein. Wie auch anderswo in den Figuren, wurde zur besseren Übersichtlichkeit auf die Darstellung von Tragestellen des Antriebs 16 bzw. der Transportvorrichtung 10 verzichtet.

Fig. 2 zeigt in einer isometrischen Darstellung von schräg unten die Transportvorrichtung 10 aus Fig. 1. In der Perspektive der Fig. 2 sind die Hakenelemente 14 gut erkennbar. Vorliegend sind die Hakenelemente 14 zwischen dem Transportrad 12 und einer vorzugsweise ringartig ausgebildeten Haltestruktur 30 angeordnet. Die Haltestruktur 30 kann zur Stabilisierung der Hakenelemente 14 und zur stabilen Führung der Vorformlinge 20 beitragen. Zur Führung der Vorformlinge 20 kann die Haltestruktur 30 ebenfalls Aufnahmerezesse aufweisen. Die Aufnahmerezesse der Haltestruktur 30 können der Ausrichtung und/oder der Form nach mit den Aufnahmerezessen 18 des Transportrades 12 korrespondieren.

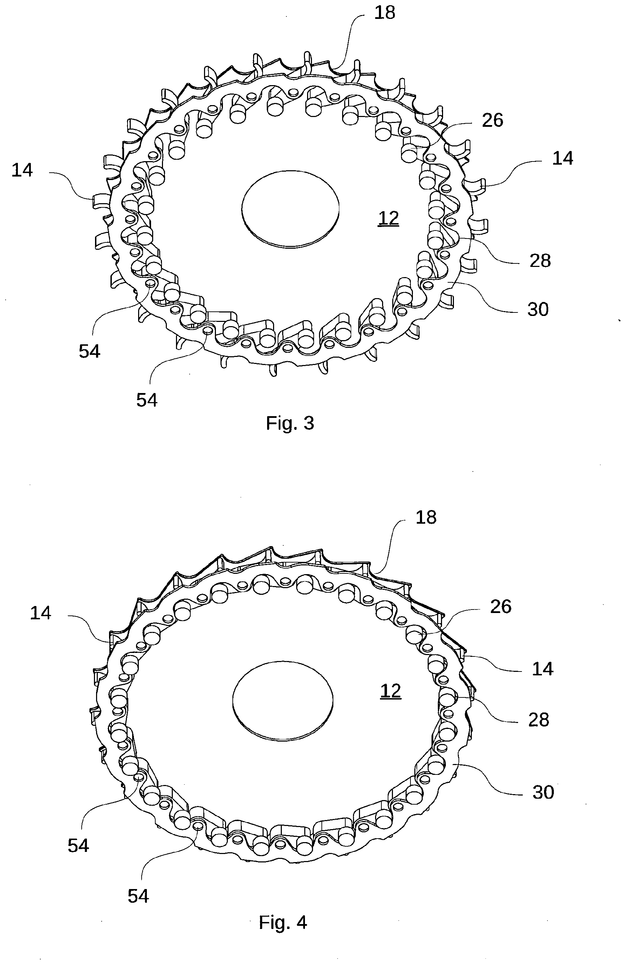

Die Fig. 3 und 4 zeigen das erfindungsgemäße Transportrad 12 aus den Fig. 1 und 2 in perspektivischen Ansichten von schräg unten. In Fig. 3 sind die Hakenelemente 14 in einer Geschlossenstellung gezeigt und in Fig. 4 in einer Offenstellung. Gut erkennbar sind die Hakenelemente 14 vorliegend zwischen dem Transportrad 12 und einer parallel zum Transportrad 12 verlaufenden Haltestruktur 30 gehaltert. An der Haltestruktur 30 können Anlagestrukturen 28 ausgebildet sein, an die jeweils ein an den Hakenelementen 14 angeordneter Anschlag 26 anschlägt, wenn das Hakenelement 14 in einer Offenstellung verschenkt ist. Wie in den Fig. 3 und 4 angedeutet, können die Anschläge 26 beispielsweise zylindrisch ausgebildet sein. Gut erkennbar ist auch die Schwenkachslagerung 54 der Hakenelemente 14.

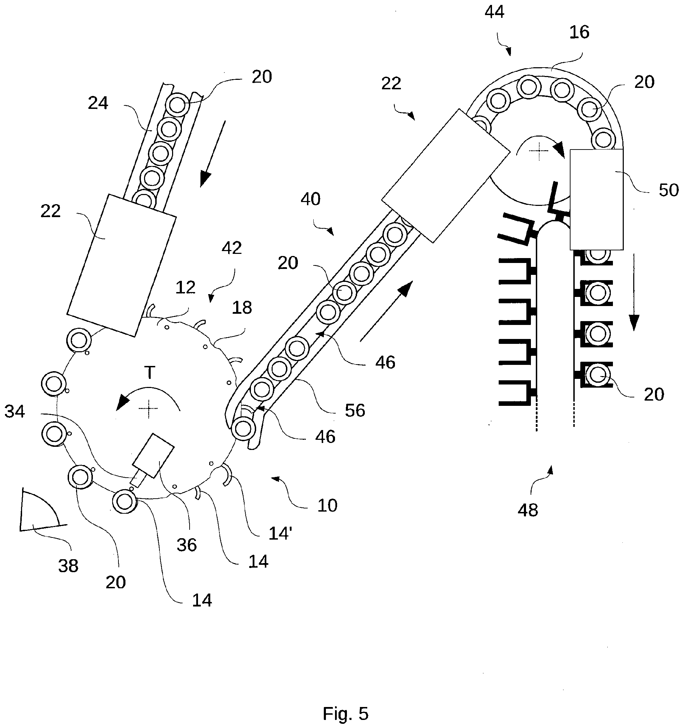

Fig. 5 zeigt stark schematisiert ein Transportsystem mit einer erfindungsgemäßen Transportvorrichtung 10. Auf zeichnerische Details wurde aus Gründen der besseren Übersichtlichkeit verzichtet. In dieser Figur ist ein Einlaufbereich 22 gezeigt, der Vorformlinge 20 an eine erste Vereinzelungseinheit 42 mit einer erfindungsgemäß ausgebildete Transportvorrichtung 10 übergibt. Der Einlaufbereich 22 übernimmt vorzugsweise aufgereihte und ausgerichtete Vorformlinge 20 aus einer Einlaufschiene 24, die dem Einlaufbereich 22 in Transportrichtung der Vorformlinge 20 stromaufwärts vorgelagert ist. Stromabwärts zum Einlaufbereich 22 werden die Vorformlinge 20 an das Transportrad 12 übergeben. Die Vorformlinge 20 werden im Bereich der Transportvorrichtung 10 mittels Rotation des Transportrades 12 von den Hakenelementen 14 in den Aufnahmerezessen 18 gehaltert der Umfangsrichtung des Transportrades 12 folgend transportiert. An nicht besetzten Aufnahmerezessen 18 ist eine Offenstellung der Hakenelemente 14 angedeutet. Zur Veranschaulichung ist bei 14' ein nicht besetzter Aufnahmerezess 18 mit einem geschlossenen Hakenelement gezeigt. In der Nebeneinanderdarstellung von Hakenelementen in einer Offen- und in einer Geschlossenstellung ist das Prinzip der Hakenhalterung verdeutlicht. Details der Transportvorrichtung, insbesondere einzelner Komponenten können wie zu vorangegangenen Figuren erläutert ausgebildet sein.

Eine Inspektionsvorrichtung 38 überprüft die an dem Transportrad 12 transportierten Vorformlinge 20. Bei Erkennung von für die Weiterverarbeitung, beziehungsweise für den Weitertransport ungeeigneter Vorformlinge 20 wird eine erfindungsgemäße Auswurfeinheit 32 derart gesteuert, dass die als ungeeignet erkannten Vorformlinge 20 jeweils einzeln aus dem Transportstrom der Vorformlinge 20 herausbewegt, ausgeschleust bzw. ausgestoßen werden.

Beim Aussondern einzelner Vorformlinge 20 entstehen im Transportstrom Lücken 46, die für den geordneten Weitertransport geschlossen werden müssen. Zur Schließung dieser Lücken 46 wird in der hier dargestellten Variante vorgeschlagen, anschließend an die Transportvorrichtung 10 eine Staustrecke 40 anzuordnen. Die Staustrecke kann z.B. als Luftförderstrecke ausgebildet sein. In denkbarer Alternative kann die Staustrecke 40 als zumindest bereichsweise waagerecht und/oder geneigt verlaufende Ablaufschiene ausgebildet sein. Der Staustrecke 40 schließt sich ein weiterer Einlaufbereich 22 an, der die Vorformlinge 20 übernimmt und an eine zweite Vereinzelungseinheit 44 übergibt.

Mittels der zweiten Vereinzelungseinheit 44 werden die Vorformlinge 20 für den Weitertransport im Bereich einer Blasmaschine (nicht dargestellt), z.B. für die Zuführung an eine Heizstrecke (nicht dargestellt), vereinzelt. Es kann dafür beispielsweise vorgesehen sein, die Vorformlinge 20 im Bereich der zweiten Vereinzelungseinheit 44, insbesondere von einem der Vereinzelungseinheit 44 zugeordneten Transportrad an einen Auslaufbereich 50 zu übergeben, der die Vorformlinge 20 der Reihe nach an eine Einzelförderstrecke 48 übergibt. Details des gezeigten Transportrad der zweiten Vereinzelungseinheit 44 können wie bei dem Transportrad 12 der Transportvorrichtung 10 ausgebildet sein. Alternativ oder zusätzlich kann ein herkömmlicher Aufbau des Transportrades vorgesehen sein. Zum Beispiel kann ein in radialem Abstand angeordneter Führungskragen ausschließlich oder zusätzlich zur Sicherung der Vorformlinge 20 vorgesehen sein. In der gezeigten Variante ist rein schematisch angedeutet, dass die Einzelförderstrecke 48 als Umlaufband mit daran befestigten Fördergabeln zum Transport separierter Vorformlinge 20 ausgeführt sein kann. Darüber hinaus sind auch andere, üblicherweise eingesetzte Förderstrecken zum Transport vereinzelter Vorformlinge 20 denkbar.

Die hier gezeigte Transportvorrichtung ermöglicht das Aussortieren von als ungeeignet erkannten Vorformlingen 20 und sorgt für eine Schließung der durch ausgesonderte Vorformlinge 20 entstandenen Lücken 46, so dass ein ununterbrochener und lückenloser Transportstrom von Vorformlingen 20 für die Zuführung an eine Blasmaschine, insbesondere an eine Heizeinrichtung einer Blasmaschine, bei verringerter Vorrichtungskomplexität ermöglicht ist.

### Bezugszeichenliste

- 10: Transportvorrichtung
- 12: Transportrad
- 14: Hakenelement
- 16: Transportradantrieb
- 18: Aufnahmerezess
- 20: Vorformling
- 22: Einlaufbereich
- 24: Einlaufschiene
- 26: Anschlag
- 28: Anlagestruktur
- 30: Haltestruktur
- 32: Auswurfeinheit
- 34: Auswurfstößel
- 36: Antrieb
- 38: Inspektionsvorrichtung
- 40: Staustrecke
- 42: erste Vereinzelungseinheit
- 44: zweite Vereinzelungseinheit
- 46: Lücke
- 48: Einzeltransportstrecke
- 50: Auslaufbereich
- 54: Schwenkachslagerung
- 56: Führungsschiene
- T: Rotationsrichtung des Tragrades

## Patentansprüche

1. Transportvorrichtung (10) zum Transport von Vorformlingen (20) aus einem thermoplastischen Material im Bereich einer Blasmaschine zur Blasformung von Behältern, aufweisend ein um eine Rotationsachse drehbar gelagertes Transportrad (12) mit mehreren, an seinem Umfang in Umfangsrichtung verteilt angeordneten Aufnahmerezessen (18) zur Aufnahme und Beförderung der Vorformlinge (20), **wobei** an dem Transportrad (12) im Bereich der Aufnahmerezesse (18) jeweils ein Hakenelement (14) angeordnet ist, das zwischen einer Offenstellung und einer Geschlossenstellung verschwenkbar an dem Transportrad (12) gelagert ist, wobei das Hakenelement (14) in der Geschlossenstellung einen zu transportierenden Vorformling (20) in dem jeweiligen Aufnahmerezess (18) gegen Herausfallen aus dem Aufnahmerezess (18) sichert, **dadurch gekennzeichnet, dass** die Transportvorrichtung eine Auswurfeinheit (32) zur selektiven Aussonderung jeweils eines einzelnen, in einem der Aufnahmerezesse (18) des Transportrades (12) transportieren Vorformlings (20) aufweist, wobei die Auswurfeinheit einen zwischen einer Stoßstellung und einer Ruhestellung längsverschiebbaren Auswurfstößel (34) aufweist, und wobei der Auswurfstößel (34) in der Stoßstellung derart in den Bereich eines der Aufnahmerezesse (18) ragt, dass ein in diesem Aufnahmerezess (18) befindlicher Vorformling (20) aus dem Aufnahmerezess (18) herausgestoßen wird.

2. Transportvorrichtung nach Anspruch 1, **dadurch gekennzeichnet, dass** die Transportvorrichtung (10) eine Inspektionsvorrichtung (38) umfasst, wobei die Inspektionsvorrichtung ausgebildet und eingerichtet ist, einen in einem der Aufnahmerezesse (18) transportierten Vorformling (20) sensorisch zu erfassen.

3. Transportvorrichtung nach einem der vorangegangenen Ansprüche, **dadurch gekennzeichnet, dass** die Transportvorrichtung (10) ein Kurvensegment umfasst, mit dem zumindest eines der Hakenelemente (14) mechanisch in die Offenstellung bzw. in die Geschlossenstellung bewegbar ist.

4. Transportvorrichtung nach einem der vorangegangenen Ansprüche, **dadurch gekennzeichnet, dass** die Hakenelemente (14) jeweils einen Antrieb aufweisen, mit dem sie in die Offenstellung und/oder in die Geschlossenstellung bewegbar sind.

5. Transportvorrichtung nach einem der vorangegangenen Ansprüche, **dadurch gekennzeichnet, dass** die Hakenelemente (14) federvorgespannt in der Offenstellung oder in der Geschlossenstellung gehalten sind.

6. Transportvorrichtung nach einem der vorangegangenen Ansprüche, **dadurch gekennzeichnet, dass** die Schwenkachsen der Hakenelemente (14) jeweils parallel zur Rotationsachse des Transportrades (12) ausgerichtet an dem Transportrad (12) gelagert sind.

7. Transportvorrichtung nach einem der vorangegangenen Ansprüche, **dadurch gekennzeichnet, dass** die Transportvorrichtung (10) eine Führungsschiene (56) zum Abtransport von Vorformlingen (20) aufweist, die derart in den Bereich des Transportrades (12) ragt, dass an dem rotierenden Transportrad (12) in den Aufnahmerezessen (18) transportierte Vorformlinge (20) zwangsgeführt von der Führungsschiene (56) übernommen und von dem Transportrad (12) wegführt werden.

8. Transportvorrichtung nach einem der vorangegangen Ansprüche, **dadurch gekennzeichnet, dass** die Längsverschiebung des Auswurfstößels (14) mit der Rotationsbewegung des Transportrades (12) synchronisiert ist.

9. Transportsystem zur Zuführung von Vorformlingen (20) an eine Blasmaschine für die Blasformung von Behältern aus thermoplastischem Material, **dadurch gekennzeichnet, dass** das Transportsystem eine Transportvorrichtung (10) nach einem der Ansprüche 1 bis 8 aufweist.

10. Blasmaschine zur Blasformung von Behältern aus Vorformlingen (20) aus einem thermoplastischen Material, aufweisend eine Transportvorrichtung (10) nach einem der Ansprüche 1 bis 8.

11. Verfahren zur Zuführung von Vorformlingen (20) an eine Blasmaschine zur Blasformung von Behältern aus einem thermoplastischen Material, wobei aufgereihte und ausgerichtete Vorformlinge (20) an eine erste Vereinzelungseinheit (42) mit einer Transportvorrichtung (10) zum Transport von Vorformlingen (20) nach einem der vorangegangenen Ansprüche übergeben werden, die Vorformlinge (20) im Bereich der Vereinzelungseinheit (42) mittels einer Inspektionsvorrichtung (38) geprüft werden, und die Vorformlinge (20) anschließend an eine Staustrecke (40) zum Aufstauen und/oder zum Schließen von durch zwischenzeitliches Aussondern einzelner Vorformlinge (20) entstandenen Lücken (46) übergeben werden.

12. Verfahren nach Anspruch 11 **dadurch gekennzeichnet, dass** die Vorformlinge (20) im Bereich der Transportvorrichtung (10) mittels der Inspektionsvorrichtung (38) kontaktlos, insbesondere optisch auf Materialunregelmäßigkeiten hin überprüft werden.

13. Verfahren nach einem der Ansprüche 11 oder 12, **dadurch gekennzeichnet, dass** die Vorformlinge (20) aus der Staustrecke (40) kommend an eine zweite Vereinzelungseinheit (44) übergeben werden und nach erfolgter Vereinzelung lückenlos separiert weitertransportiert werden.

## Claims

1. Transport device (10) for transporting preforms (20) made of a thermoplastic material in the region of a blow moulding machine for the blow moulding of containers, comprising a transport wheel (12) rotatably mounted around a rotational axis with a plurality of receptacle recesses (18) arranged in a distributed manner around its circumference in the circumferential direction for holding and conveying the preforms (20), **wherein,** on the transport wheel (12) in the region of the receptacle recess (18), a hook element (14) is respectively arranged, which is swivel-mounted on the transport wheel (12) capable of being pivoted between an open position and a closed position, wherein, in the closed position, the hook element (14) secures a preform (20) to be transported in the respective receptacle recess (18) against falling out of the receptacle recess (18), **characterized in that** the transport device comprises an ejection unit (32) for the selective separation of each individual preform (20) transported in one of the receptacle recesses (18) of the transport wheel (12), wherein the ejection unit comprises an ejection pin (34) that can be longitudinally slid between an ejection position and a rest position, and wherein the ejection pin (34) protrudes into the region of one of the receptacle recesses (18) in the ejection position in such a way that a preform (20) located in this receptacle recess (18) is ejected out of the receptacle recess (18).

2. Transport device according to Claim 1, **characterized in that** the transport device (10) comprises an inspection device (38), wherein the inspection device is designed and set up for the sensor detection of a preform (20) transported in one of the receptacle recesses (18).

3. Transport device according to any one of the preceding claims, **characterized in that** the transport device (10) comprises a curved segment, with which at least one of the hook elements (14) can be mechanically moved into the open position or into the closed position.

4. Transport device according to any one of the preceding claims, **characterized in that** the hook elements (14) each comprise a drive with which they can be moved into the open position and/or into the closed position.

5. Transport device according to any one of the preceding claims, **characterized in that** the hook elements (14) are held in the open position or in the closed position in a spring-preloaded manner.

6. Transport device according to any one of the preceding claims, **characterized in that** the pivot axes of the hook elements (14) are each mounted to the rotational axis of the transport wheel (12), aligned on the transport wheel (12).

7. Transport device according to any one of the preceding claims, **characterized in that** the transport device (10) comprises a guide rail (56) for the removal of preforms (20) which protrudes into the region of the transport wheel (12) in such a way that the preforms (20) transported on the rotating transport wheel (12) in the receptacle recesses (18) are taken by the guide rail (56) and are guided away from the transport wheel (12).

8. Transport device according to any one of the preceding claims, **characterized in that** the longitudinal displacement of the ejection pin (14) is synchronized with the rotational movement of the transport wheel (12) .

9. Transport system for supplying preforms (20) to a blow moulding machine for the blow moulding of containers made of thermoplastic material, **characterized in that** the transport system comprises a transport device (10) according to any one of the Claims 1 to 8.

10. Blow moulding machine for the blow moulding of containers from preforms (20) made of a thermoplastic material, comprising a transport device (10) according to any one of the Claims 1 to 8.

11. Method for supplying preforms (20) to a blow moulding machine for the blow moulding of containers made of a thermoplastic material, wherein lined-up and aligned preforms (20) are transferred to a first separation unit (42) with a transport device (10) for transporting preforms (20) according to any one of the preceding claims, the preforms (20) are tested in the region of the separation unit (42) by means of an inspection device (38), and the preforms (20) are then transferred to a buffer line (40) for filling in and/or for closing gaps (46) created by intermittently separating individual preforms (20).

12. The method according to Claim 11, **characterized in that** the preforms (20) are checked in the region of the transport device (10) for material irregularities by means of the inspection device (38) in a contactless manner, in particular in an optical manner.

13. The method according to any one of the Claims 11 or 12, **characterized in that** the preforms (20) coming from the buffer line (40) are transferred to a second separation unit (44) and are further transported in a completely separated manner after separation has taken place.

## Revendications

1. Dispositif de transport (10) pour le transport de préformes (20) en un matériau thermoplastique dans la zone d'une machine de moulage de récipients par soufflage, présentant une roue de transport (12) logée de façon à pouvoir pivoter autour d'un axe de rotation et pourvue à sa circonférence de plusieurs creux de réception (18) répartis dans le sens périphérique et destinés à recevoir et transporter les préformes (20), un élément en crochet (14) étant respectivement agencé sur la roue de transport (12) au niveau de chaque creux de réception (18), cet élément étant logé sur la roue de transport (12) de façon à pouvoir pivoter entre une position ouverte et une position fermée, l'élément en crochet (14) maintenant en position fermée une préforme (20) à transporter dans le creux de réception (18) correspondant pour éviter qu'elle n'en tombe, **caractérisé en ce que** le dispositif de transport présente une unité d'éjection (32) pour l'élimination sélective de préformes (20) individuelles transportées dans l'un des creux de réception (18) de la roue de transport (12), l'unité d'éjection présentant un poussoir d'éjection (34) pouvant coulisser longitudinalement entre une position d'éjection et une position de repos et le poussoir d'éjection (34) pénétrant, en position d'éjection, dans la zone de l'un des creux de réception (18) de façon à ce qu'une préforme (20) logée dans ce creux de réception (18) en soit éjectée.

2. Dispositif de transport selon la revendication 1, **caractérisé en ce que** le dispositif de transport (10) comprend un dispositif de contrôle (38), ce dispositif de contrôle étant conçu et aménagé pour assurer une détection sensorielle d'une préforme (20) transportée dans l'un des creux de réception (18).

3. Dispositif de transport selon l'une des revendications précédentes, **caractérisé en ce que** le dispositif de transport (10) comprend un segment de came permettant de déplacer mécaniquement au moins l'un des éléments en crochet (14) pour le placer respectivement en position ouverte ou fermée.

4. Dispositif de transport selon l'une des revendications précédentes, **caractérisé en ce que** les éléments en crochet (14) présentent respectivement un entraînement permettant de les placer en position ouverte et/ou en position fermée.

5. Dispositif de transport selon l'une des revendications précédentes, **caractérisé en ce que** les éléments en crochet (14) sont maintenus en position ouverte ou en position fermée par un ressort prétendu.

6. Dispositif de transport selon l'une des revendications précédentes, **caractérisé en ce que** les axes de pivotement des éléments en crochet (14) sont respectivement logés sur la roue de transport (12) selon une orientation parallèles à l'axe de rotation de la roue de transport (12).

7. Dispositif de transport selon l'une des revendications précédentes, **caractérisé en ce que** le dispositif de transport (10) présente un coulisseau (56) pour le transport de préformes (20) qui pénètre dans la zone de la roue de transport (12) de façon telle que les préformes (20) transportées dans les creux de réception (18) par la roue de transport (12) en rotation sont reprises en guidage forcé par le coulisseau (56) puis transportées hors de la zone de la roue de transport (12).

8. Dispositif de transport selon l'une des revendications précédentes, **caractérisé en ce que** le déplacement longitudinal du poussoir d'éjection (14) est synchronisé avec le mouvement de rotation de la roue de transport (12).

9. Système de transport pour l'amenée de préformes (20) dans une machine de moulage par soufflage de récipients en matériau thermoplastique, **caractérisé en ce que** le système de transport présente un dispositif de transport (10) selon l'une des revendications 1 à 8.

10. Machine de moulage par soufflage de récipients à partir de préformes (20) en un matériau thermoplastique équipée d'un dispositif de transport (10) selon l'une des revendications 1 à 8.

11. Procédé pour l'amenée de préformes (20) dans une machine de moulage par soufflage de récipients en un matériau thermoplastique, les préformes (20) alignées et orientées étant remises à une première unité de séparation (42) dotée d'un dispositif de transport (10) pour le transport de préformes (20) selon l'une des revendications précédentes, les préformes (20) étant contrôlées dans la zone de l'unité de séparation (42) au moyen d'un dispositif de contrôle (38) après quoi les préformes (20) sont remises à une section d'accumulation (40) pour s'accumuler et/ou combler des lacunes (46) occasionnées par l'élimination précédente de certaines préformes (20) intervenue entre temps.

12. Procédé selon la revendication 11, **caractérisé en ce que** les préformes (20) sont contrôlées sans contact, notamment par procédé optique, dans la zone du dispositif de transport (10) au moyen du dispositif de contrôle (38) pour détecter des vices de matériel.

13. Procédé selon l'une des revendications 11 ou 12, **caractérisé en ce que** les préformes (20) provenant de la section d'accumulation (40) sont remises à une seconde unité de séparation (44) puis, après séparation, transportées séparément et sans lacunes.
